# EUROPEAN PATENT APPLICATION

(11) **EP 1 783 011 A2**
(43) Date of publication of application: **09.05.2007**
(21) Application number: 07101690.1
(22) Date of filing: 22.03.2005
(51) Int. Cl.: B60R 22/02, B60R 22/195, B60R 22/22

(54) **Pretensioner**

(30) Priority: 22.03.2004 EP 04251646; 11.06.2004 EP 04253510; 26.07.2004 EP 04254459
(62) Divisional of application: 05251728.1
(71) Applicant: KEY SAFETY SYSTEMS, INC., Sterling Heights, MI 48314 (US)
(72) Inventor: Bell, John, Carlisle, Cumbria CA2 6QU (GB); Jack, Brian A., Annan, Dumfiesshire, DG12 6PR (GB); Hunter, David, Carlisle, Cumbria CA2 4BH (GB); Blackadder, David, Carlisle, Cumbria CA4 8QG (GB)
(74) Representative: Freeman, Jacqueline Carol

(57) **Abstract**

A pretensioner for a three point seat belt comprising: a cylinder adapted to be attached to a structural part member of a vehicle; a piston disposed within the cylinder; a pyrotechnic means for moving the piston in a direction that is longitudinal relative to the cylinder in a pretensioning direction; a slider bar comprising a portion which is fixedly oriented substantially longitudinally with respect to the vehicle; a seat belt webbing mounted on the slider bar such that the webbing can freely move along said portion of the slider bar when the seat belt is not under tension; and
a cable that extends from the piston and is connected to the webbing to cause the seat belt webbing to move along the slider bar in a pretensioning direction when the pyrotechnic means for moving the piston is activated.

## Description

This application is a divisional application divided from parent application EP 05251728.1, which was published as EP 1580091. The text of the parent application is reproduced below as Appendix A.

### BACKGROUND

The present invention relates to a pretensioner and particularly to a pretensioner for a vehicle safety restraint mechanism such as a seat belt.

Traditionally a seat belt safety restraint comprises a length of belt webbing connected at three points to load bearing parts of a vehicle. Typically one end is bolted to a door sill on one side of the seat, arranged to pass laterally across the hips of the seat occupant to a buckle mechanism fixed to the vehicle on the opposite side of the seat, and then diagonally across the torso of the seat occupant, via a shoulder support to a retractor mounted on the B pillar adjacent the door. The buckle mechanism engages a buckle tongue slidably attached to the webbing.

The retractor fitted at the pillar end of the webbing increases the comfort for the seat occupant restrained by the belt and allows the webbing to pay out under relatively low loads to enable limited movement of the restrained seat occupant, for example to reach in-car entertainment controls or storage compartments. The retractor is biased to keep the webbing relatively taut about the seat occupant and a locking element is included to lock the retractor against webbing payout in the event of a dangerous situation being detected. For example, an acceleration sensor activates if the vehicle undergoes rapid acceleration or deceleration indicative of a crash.

In recent years, pretensioners have been introduced to rapidly pull in a length of webbing to actively tighten the belt about the vehicle occupant in the event of a crash. This takes up any slack which may have developed in the belt and helps to more correctly position the vehicle occupant in the seat to maximise the effect of the belt protection and of any secondary safety restraint such as an airbag.

Pretensioners comprise a force reservoir such as a pyrotechnically operated gas generator to provide an impulse of sufficient magnitude to tighten the belt in a short space of time, ideally before the crash pulse takes full effect. A typical known pretensioner may use rotational means to wind in a length of seat belt webbing, for example by rotating the retractor spool on the B pillar in a webbing rewind direction to take in the required length of webbing prior to the retractor locking against webbing payout. It is also known to tighten the belt using a pretensioner attached to the buckle mechanism such as is described in US 6,250,720 and DE 2234246 in which the buckle is pulled back in a vertical direction. In addition, US 6,626,463 suggests in Figure 7 a seat belt pretensioning unit at the sill end of the belt. Such a sill pretensioner is also shown in US 2004/212188.

US 2003/0137140 describes a mechanism with a pretensioner at the buckle end and at the sill end with a fastening element below the vehicle seat.

It is desirable for pretensioner arrangements to be as compact as possible to save space without compromising the capability to pull in a sufficient length of the seat belt webbing in the event of a crash. However, known pretensioning arrangements tend to be bulky, and are particularly difficult to use for the front seats of a three-door vehicle because of the need to allow access to the rear of such a vehicle past the front seats. Using a traditional retractor pretensioner mechanism in a front seat of a three-door vehicle causes an unacceptable obstruction.

Seat travel is greater in a three-door vehicle than in a five-door vehicle in order to provide such access, and to accommodate this the door sill end of the webbing is usually attached to a so-called slider bar of well-known design, instead of being fixedly bolted to the floor. This allows the sill end of the webbing to be moved longitudinally forward and rearward to facilitate rear seat access and front seat movement.

It has been difficult to design suitable pretensioners for use with slider bars and/ or for use in three-door vehicles without obstructing the function of the slider bar or obstructing access to the rear seats.

One known combination is in FR 2855126 describes a pretensioning device attached to a slider bar which is pivotally movable in a pretensioning direction in the event of a collision of the vehicle.

The present invention provides an improved pretensioning arrangement.

According to the present invention there is provided a pretensioner for a three point seat belt comprising: a cylinder adapted to be attached to a structural part of a vehicle and a piston disposed within the cylinder; a pyrotechnic means for moving the piston in a direction that is longitudinal relative to the cylinder in a pretensioning direction; a slider bar comprising a portion which is fixedly oriented substantially longitudinally with respect to the vehicle; a seat belt webbing mounted on the slider bar such that the webbing can freely move along said portion of the slider bar when the seat belt is not under tension; and a cable that extends from the piston and is connected to the webbing to cause the seat belt webbing to move along the slider bar in a pretensioning direction when the pyrotechnic means for moving the piston is activated.

In this way the sill end of the belt is free to move along the slider bar when the seat belt is not under tension either from use in restraining a seat occupant and/or from a pretensioning operation.

Preferably the seat belt webbing is mounted on the slider bar by looping the webbing around the slider bar; and the cable loops around the seat belt webbing.

Alternatively, the seat belt webbing is mounted on the slider bar by looping the webbing around the outer surface of a hollow cylindrical bobbin or otherwise attaching it to such a bobbin, the cylindrical bobbin being freely moveable along a portion of the slider bar; and the cable is attached to the cylindrical bobbin.

Preferably the seat belt pretensioner further comprises a means for restraining motion of the end of the seat belt webbing in a non-pretensioning direction following activation of the means for moving the piston.

The pretensioner may be installed in a motor vehicle, such that the cylinder is connected to a structural member of the vehicle and extends in a direction that is longitudinal with respect to the vehicle.

Alternatively it may be installed such that the cylinder does not extend longitudinally with respect to the vehicle. It may be installed below a seating surface of a vehicle seat.

In one embodiment the cylinder may be connected to a structural member of the vehicle such that the cylinder extends in a direction that is longitudinal with respect to the vehicle, and a load bearing webbing guide causes the seat belt webbing to follow a path that is generally parallel to a line of force that will be exerted by the pretensioner when the means for moving the piston is activated.

Alternatively the cylinder may be connected to a structural member of the vehicle such that the cylinder extends in a direction that is longitudinal with respect to the vehicle, and a load bearing webbing guide is arranged to cause the seat belt webbing to follow a path that is less than thirty degrees of parallel to a line of force that will be exerted by the pretensioner when the means for moving the piston is activated.

Pretensioners can be constructed according to the invention which make access to rear seats easier, have smaller package sizes and which are attached to an appropriate sill anchorage zone.

For a better understanding of the present invention, and to show how the same may be carried into effect, reference will now be made, by way of example, to the accompanying drawings, in which:
Figures 1A and 1B are side views of a pretensioner according to a first embodiment of the present invention;
Figures 2A and 2B are side views of a pretensioner according to a second embodiment of the present invention.

As used herein and in the claims terms such as "forward" and "rearward", "front" and "back" and similar terms are understood to be correlated to the front and rear of a vehicle in which the seat belt pretensioning apparatus of the invention is installed. Furthermore, as used herein and in the claims terms such as "above" and "below", and "higher" and "lower" are understood to be correlated to the roof and floor of the passenger compartment of a vehicle in which the seat belt pretensioning apparatus of the invention is installed.

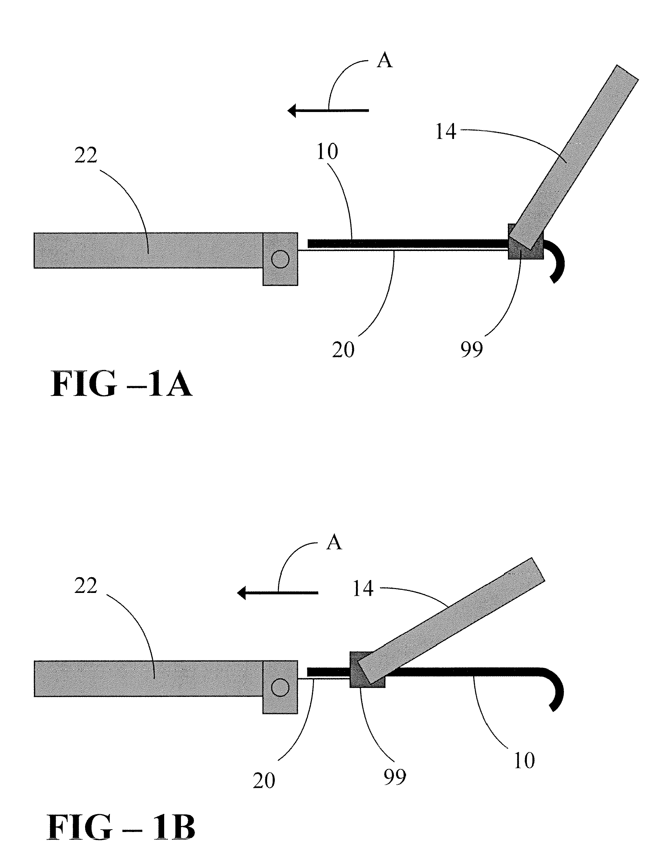

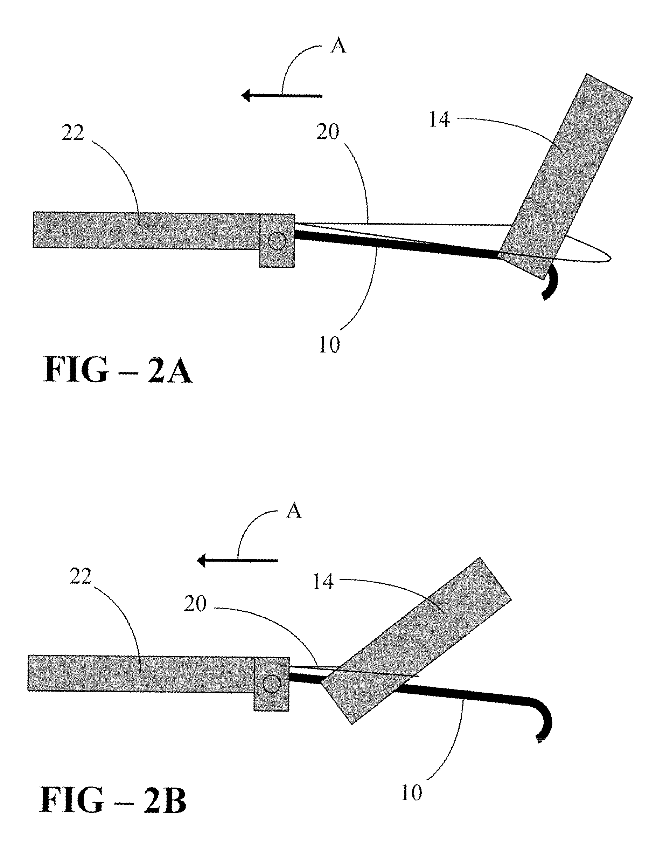

Each of Figures 1A, 1B, 2A and 2B shows a pretensioning unit 22, a slider bar 10 and a cable 20 for pulling the seat belt webbing 14 in a pretensioning direction.

The seat belt webbing 14 is of a conventional design and is attached at one end to a retractor mounted, adjacent a seat, to a load bearing part of the vehicle such as a vehicle side pillar also known as a B pillar (not shown). The webbing passes through a web guide also attached to the side pillar and has a buckle tongue, which is insertable into a buckle (not shown) located on the other side of the seat, in known manner.

When in use, and tensioned around a seat occupant, the seat belt webbing 14 is at the forward end of the slider bar 10 in the load bearing position right hand side as shown in Figure 1A. When the seat belt is not in use the end of the webbing 14 may be moved in a rearward direction (relative to the normal direction of movement of the vehicle) as shown by arrow A, along the slider bar 10 so that it does not obstruct access through the door to the rear seat of a three-door vehicle.

The cable 20 is preferably of metal and extends from the pyrotechnic pretensioning unit 22. The unit 22 is of a known type and contains a piston within a cylindrical housing and a gas generator. The gas generator is pyrotechnically activated to provide an impulse which forces the piston along the cylindrical housing, in the direction of arrow A, and pulls the cable 20, pulling the seat belt 14 back in the direction of arrow A, i.e. in a pretensioning direction.

Prior to pretensioning, the belt 14 is positioned for normal use at its forward most position, at the right hand side as shown in Figure 1A. When an acceleration of the vehicle is sensed above a predetermined threshold, a crash sensor, in known manner, generates a signal indicative of a crash which causes the pyrotechnic gas generator of unit 22 to fire, creating a tension in the cable 20. The tension in the cable 20 pulls the belt 14 in the rearward pretensioning direction of arrow A in the region of 50 to 150 mm depending upon the vehicle size and requirements.

The sudden movement of the belt 14 in the direction of arrow A takes up any slack in the webbing 14 so as to correctly position a vehicle occupant within a seat in order to maximise the benefit of the seat belt and correctly position him for maximum effect of any secondary restraint such as an airbag.

Figure 1B shows the position of the belt 14 immediately after pretensioning. After the pyrotechnic unit 22 has fired, the piston is prevented from returning to its original position under the forward momentum of the vehicle occupant during a crash, by a restraining means.

A ratchet, or other form of non-return mechanism may be built directly into the pretensioning unit 22 in known manner. For example saw-tooth shaped projections may be built into the inside wall of the cylinder and a cooperating tooth attached to the piston to allow the piston to move in the pretensioning direction A but not the opposite direction.

In Figure 1A the pretensioning unit 22 is located at one end of the slider bar 10. The webbing 14 is mounted on a bobbin 99 on the slider bar 10 and in normal use, when restraining a seat occupant, will adopt the forward position shown in Figure 1A, at the opposite end of the slider bar 10 to the pretensioning unit 22. A cable 20 connects the piston of the pretensioning unit 22 to the bobbin 99. When a crash sensor indicates that a sudden deceleration or acceleration is taking place, the pretensioning unit 22 is pyrotechnically activated to pull the cable 20 and thus the bobbin 99 and the webbing 14 in the pretensioning direction as shown by arrow A. Figure 1A shows the belt 14 in an unpretensioned position and Figure 1B after pretensioning. Of course the pretensioning unit 22 could be mounted in any orientation, for example under or adjacent the slider bar to save space and cable guides could be fitted to avoid snagging. It may also be mounted in an orientation transverse rather than longitudinal of the vehicle and/or beneath a vehicle seat.

Figures 2A and 2B show another embodiment of the present invention. The pretensioning unit 22 is located at one end of the slider bar 10 as in Figures 1A and 1B. However in this embodiment the end of the webbing 14 is looped directly around the slider bar 10 so as to be freely movable along its length in normal use, to allow the seat belt webbing to be moved away from the vehicle door when access is required to rear seats in a three-door vehicle. The cable 20 is connected to the piston in the pretensioning unit 22 and forms a loop which surrounds the webbing 14 in the region of the slider bar 10. When a crash sensor indicates that a sudden deceleration or acceleration is taking place, the pretensioning unit 22 causes the looped cable 20 to be pulled in the direction A toward the cylinder of the pretensioning unit 22, to tighten around the webbing 14 and to pull the webbing back along the slider bar 10 in the pretensioning direction A to the pretensioned position shown in Figure 2B.

A load bearing guide can be used to increase the performance of the pretensioning arrangement and it is preferable to arrange such a guide to make the webbing 14 travel along a line more parallel and closer to the line of force exerted by the pretensioning unit 22, thereby increasing the performance. This increase in performance means that a physically shorter pretensioning unit 22 can be used to achieve the same pretensioning effect, i.e. to pull in the same length of webbing slack.

According to one embodiment a seat belt guide is fixed to a load bearing part of the vehicle in such a position that a section of the seat belt in the vicinity of the pretensioning unit adapts a line angled to the line of force of the pretensioning unit by less than 30 degrees.

Of course elements of the embodiments described may be combined. For example the cable 20 could be attached to an arrangement such as a carriage 16 sliding on a rail 18, as in Figure 1 of EP 1580091. The pretensioning unit 22 could then be connected to the carriage 16 by another cable and be mounted either in line with, or below, the rail 18.

Appendix A follows, which is the full text and drawings of the parent application, published as EP 1580091. This is included for background information and completeness although some of the disclosure duplicates some of the description above.

## Claims

1. A pretensioner for a three point seat belt comprising:
a cylinder (22) adapted to be attached to a structural part member of a vehicle;
a piston disposed within the cylinder (22);
a pyrotechnic means for moving the piston in a direction that is longitudinal relative to the cylinder (22) in a pretensioning direction (A);
a slider bar (10) comprising a portion which is fixedly oriented substantially longitudinally with respect to the vehicle;
a seat belt webbing (14) mounted on the slider bar (10) such that the webbing (14) can freely move along said portion of the slider bar (10) when the seat belt is not under tension; and
a cable (20) that extends from the piston and is connected to the webbing to cause the seat belt webbing (14) to move along the slider bar (10) in a pretensioning direction when the pyrotechnic means (22) for moving the piston is activated.

2. A seat belt pretensioner according to claim 1 wherein the seat belt webbing (14) is mounted on the slider bar (10) by looping the webbing (14) around the slider bar (10); and the cable (20) loops around the seat belt webbing (14).

3. A seat belt pretensioner according to claim 1 wherein the seat belt webbing (14) is mounted on the slider bar (10) by looping the webbing (14) around the outer surface of a hollow cylindrical bobbin (99), the cylindrical bobbin being freely moveable along a portion of the slider bar (10); and the cable (20) being attached to the cylindrical bobbin (99).

4. A seat belt pretensioner according to claim 1, 2 or 3 further comprising a means for restraining motion of the end of the seat belt webbing in a non-pretensioning direction following activation of the means for moving the piston.

5. A seat belt pretensioner according to any one of claims 1 to 4 installed in a motor vehicle below a seating surface of a vehicle seat such that the cylinder does not extend longitudinally with respect to the vehicle.

6. A seat belt pretensioner according to any one of claims 1 to 4 installed in a motor vehicle, the cylinder being connected to a structural member of the vehicle such that the cylinder extends in a direction that is longitudinal with respect to the vehicle.

7. A seat belt pretensioner according to any one of claims 1, 2, 3, or 6 installed in a motor vehicle, the cylinder being connected to a structural member of the vehicle such that the cylinder extends in a direction that is longitudinal with respect to the vehicle, and a load bearing webbing guide causes the seat belt webbing to follow a path that is generally parallel to a line of force that will be exerted by the pretensioner when the means for moving the piston is activated.

8. A seat belt pretensioner according to any one of claims 1, 2, 3, 4, or 6 installed in a motor vehicle, the cylinder being connected to a structural member of the vehicle such that the cylinder extends in a direction that is longitudinal with respect to the vehicle, and a load bearing webbing guide causes the seat belt webbing to follow a path that is less than thirty degrees of parallel to a line of force that will be exerted by the pretensioner when the means for moving the piston is activated.
